# EUROPEAN PATENT APPLICATION

(11) **EP 4 394 535 A1**
(43) Date of publication of application: **03.07.2024**
(21) Application number: 23150009.1
(22) Date of filing: 02.01.2023
(51) Int. Cl.: G05B 23/02

(54) **AN AUTOMATION SYSTEM COMPRISING AN EQUIPMENT INSPECTING CARRIAGE**

(71) Applicant: ABB SCHWEIZ AG, 5400 Baden (CH)
(72) Inventor: PRETLOVE, John, 1338 Sandvika (NO); TVEIT, Orjan, 5151 Bergen (NO); LOOTSMA, Tako, 1396 Billingstad (NO); HAMILTON, Simon-John, 5216 Lepsøy (NO); NESHEIM, Henning Caillé, 1369 Stabekk (NO); MONRAD, Svein, 1606 Fredrikstad (NO)
(74) Representative: Kransell & Wennborg KB

(57) **Abstract**

An equipment investigating arrangement comprises an equipment inspecting carriage (44) running on a track (42) at least entering an automation equipment environment (31) of a first piece of automation equipment (20), the carriage (44) comprising an image capturing device (46), a sound registering arrangement (48) and a carriage control unit (52) operative to control the sound registering arrangement (48) to register sounds emitted in the automation equipment environment (31), which sounds comprise sounds registered at a first track position (P1) of the carriage (44), receive the sounds from the sound registering arrangement (48), the sounds comprising sounds emitted from a point of interest (POI) on the first piece of automation equipment (20), determine a direction from the image capturing device (46) to the point of interest (POI) based on the received sounds and adjust the track position of the carriage (44) and/or the orientation of the image capturing device (46) based on the determined direction.

## Description

### TECHNICAL FIELD

The present disclosure relates to an equipment inspecting arrangement, an automation system as well as to a method of controlling an equipment inspecting carriage in the automation system.

### BACKGROUND

In automation systems, such as in some process control systems, there may be areas with automation equipment that are either remotely located and/or in which the environment is unsuitable for humans. The environment may for instance be hostile or hazardous. It may additionally be necessary to inspect such areas for various reasons, for instance because of an alarm or an alert caused by a detected fault on the automation equipment. There is therefore a need for allowing the automation equipment in such an area to be inspected.

When an alarm or an alert situation arises in a remote area, staff are traditionally sent to observe and assess the area and the situation. For manned areas this may be possible although there can be areas which have restricted access and therefore make it a bit more difficult. For unmanned areas this is not normally possible and there may be a considerable interval before people are being sent out to the area, such as at a following planned maintenance cycle. In either case such observations can be time consuming, in-effective, and expensive.

It is possible to inspect a part of an automation system without sending people. One example of this is disclosed in KR 10-2019-0046129, where inspection of automation equipment in a Supervisory Control and Data Acquisition (SCADA) system is performed using a camera movement device running on a rail for caption of images in a gas-insulated switchgear (GIS) in a gas-insulated switchgear room.

However, it may additionally be hard to locate a point of interest of a piece of automation equipment that needs to be inspected and consequently also for capturing images of the point of interest. This may make it hard to determine the cause or the severity of the malfunction. There is therefore a need for an improvement in the inspecting of automation equipment using moveable inspecting means.

### SUMMARY

One objective of the invention is therefore to provide inspection of an automation equipment environment of an automation system that can be made in an easier way.

According to a first aspect this is achieved through an equipment inspecting arrangement for inspecting a first piece of automation equipment, the equipment inspecting arrangement comprising an equipment inspecting carriage adapted to run on a track at least entering a first area of an automation system comprising the first piece of automation equipment, the first area being an automation equipment environment for the first piece of automation equipment, the equipment inspecting carriage comprising an image capturing device and a sound registering arrangement, the equipment inspecting arrangement further comprising a carriage control unit operative to
control the sound registering arrangement to register sounds emitted in the automation equipment environment, which sounds are a type of diagnosing data of the first piece of automation equipment and comprise sounds registered at a first track position of the equipment inspecting carriage,
receive said sounds from the sound registering arrangement, the sounds comprising sounds emitted from a point of interest on the first piece of automation equipment,
determine a direction from the image capturing device to the point of interest on the first piece of automation equipment based on the received sounds, and
adjust the track position of the equipment inspecting carriage and/or the orientation of the image capturing device based on the determined direction.

The object is according to a second aspect achieved through a method of controlling an equipment inspecting carriage in an automation system comprising automation equipment including a first piece of automation equipment in a first area of the automation system, the first area being an automation equipment environment for the first piece of automation equipment and the equipment inspecting carriage comprising an image capturing device and a sound registering arrangement, the method comprising:
controlling the sound registering arrangement to register sounds emitted in the automation equipment environment, which sounds are a type of diagnosing data of the first piece of automation equipment and comprise sounds registered at a first track position of the equipment inspecting carriage,
receiving the sounds from the sound registering arrangement, the sounds comprising sounds emitted from a point of interest on the first piece of automation equipment,
determining a direction from the image capturing device to the point of interest on the first piece of automation equipment based on the received sounds, and
adjusting the track position of the equipment inspecting carriage and/or the orientation of the image capturing device based on the determined direction.

According to a first variation of the first aspect, the carriage control unit is further operative to determine a distance from the image capturing device to the point of interest based on the received sounds and the adjusting is based also on the determined distance.

According to a corresponding variation of the second aspect, the method further comprises determining a distance from the image capturing device to the point of interest based on the received sounds and the adjusting is based also on the determined distance.

According to a second variation of the first and second aspects, the sound registering arrangement is moveable between two different arrangement positions and the distance is determined based on the sounds registered at the two arrangement positions.

According to a third variation of the first aspect, the carriage control unit is further operative to control the image capturing device to capture images of the first piece of automation equipment and receive the images from the image capturing device, where the diagnosing data of the first piece of automation equipment also comprises the received images.

According to a corresponding variation of the second aspect, the method further comprises controlling the image capturing device to capture images of the first piece of automation equipment and receiving the images from the image capturing device, where the diagnosing data of the first piece of automation equipment also comprises the received images.

The equipment inspecting carriage may further comprise a sensor device operative to sense physical properties of the automation equipment environment.

According to a fourth variation of the first aspect, the carriage control unit is in this case further operative to receive the sensed physical properties of the automation equipment environment, where the diagnosing data of the first piece of automation equipment also comprises the sensed physical properties of the automation equipment environment.

In a corresponding variation of the second aspect, the method further comprises receiving the sensed physical properties of the automation equipment environment, where the diagnosing data of the first piece of automation equipment also comprises the sensed physical properties of the automation equipment environment.

A third aspect of the invention is concerned with an automation system comprising automation equipment including the first piece of automation equipment in the first area of the automation system, an alert handling device and the equipment inspecting arrangement according to the first aspect.

According to one variation of the third aspect, the alert handling device is operative to control the equipment inspecting carriage to move on the track to the first track position in the automation equipment environment.

According to a corresponding variation of the second aspect, the method further comprises controlling the equipment inspecting carriage to move on the track to the first track position in the automation equipment environment.

According to yet one variation of the third aspect, the alert handling device is operative to obtain an alert regarding the first piece of automation equipment and the control of the equipment inspecting carriage to move to the first track position is based on the alert.

According to a corresponding variation of the second aspect, the method further comprises obtaining an alert regarding the first piece of automation equipment and where the controlling of the equipment inspecting carriage to move to the first track position is based on the alert.

According to a further variation of the third aspect, the alert handling device is operative to collect the diagnosing data from the equipment inspecting carriage, determine an activity based on the diagnosing data and perform the activity in the automation system.

According to a corresponding variation of the second aspect, the method further comprises collecting the diagnosing data from the equipment inspecting carriage, determining an activity based on the diagnosing data and performing the activity in the automation system.

The adjusting may involve moving the equipment inspecting carriage to a track position for which the distance between the image capturing device and the point of interest is the shortest and/or for which there is a line of sight between the point of interest and the image capturing device. The adjusting may additionally or instead comprise changing the orientation of the image capturing device such that it points towards the point of interest.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 is a diagram schematically illustrating an automation system comprising user terminals, a process control device, a safety control device, a condition monitoring device and automation equipment in an automation equipment environment,
Fig. 2 schematically shows a realization of the safety control device,
Fig.3 schematically shows an equipment inspecting carriage running on a track and entering the automation equipment environment,
Fig. 4 schematically shows a realization of a carriage control unit of the equipment inspecting carriage,
Fig. 5 schematically shows the safety control device sending a control command to the carriage control unit and receiving diagnosing data from the carriage control unit,
Fig. 6 schematically shows the equipment inspecting carriage at two positions in the automation equipment environment for inspecting a point of interest on a first piece of automation equipment,
Fig. 7 shows a flow chart of a number of steps in a method of controlling the equipment inspecting carriage, which method steps are being performed by the carriage control unit, and

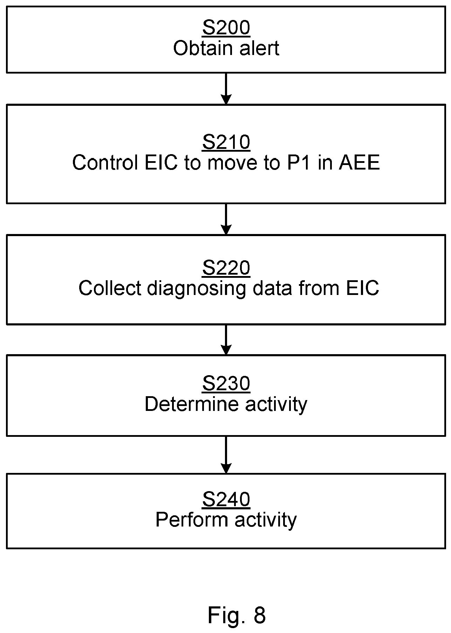

Fig. 8 shows a flow chart of a number of further steps in the method of controlling the equipment, which method steps are being performed by the safety control device.

### DETAILED DESCRIPTION

Aspects of the present disclosure will now be described more fully hereinafter with reference to the accompanying drawings, in which certain embodiments are shown.

These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

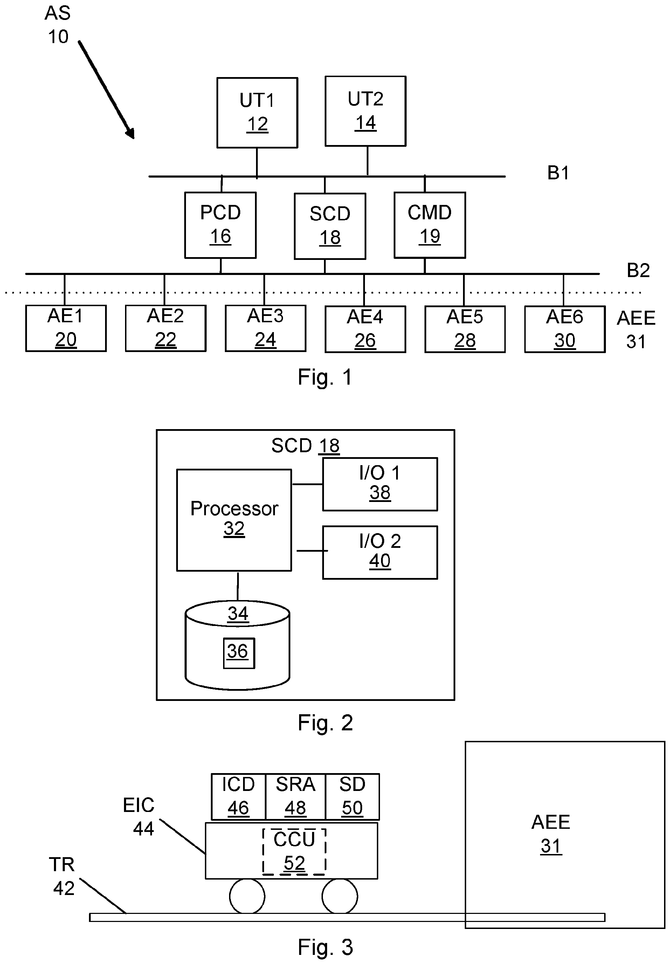

Fig. 1 is a diagram schematically illustrating an automation system AS 10.

The automation system 10 maybe a process control system for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. The process may be monitored through an operator terminal or workstation. Such a workstation or operator terminal is also a form of user terminal.

In Fig. 1 the automation system 10 therefore includes a number of user terminals, here exemplified by a first user terminal UT1 12 and a second user terminal UT2 14, connected to a first bus B1. There is furthermore a second bus B2 and between the first and second busses B1 and B2 there are connected a process control device PCD 16 with a control function for controlling the process, a safety control device SCD 18 which performs safety control in the process and a condition monitoring device CMD 19. To the second bus B2 there is furthermore connected a number of pieces of automation equipment. There is here a first piece of automation equipment AE1 20, a second piece of automation equipment AE2 22, a third piece of automation equipment AE3 24, a fourth piece of automation equipment AE4 26, a fifth piece of automation equipment AE5 28 and a sixth piece of automation equipment AE6 30 connected to the second bus B2. The automation equipment may comprise one or more controllers having some local software for controlling other automation equipment such as field devices. The automation equipment may also comprise such field devices. The field devices may comprise devices that influence or measure different properties of a technical process. A field device may for instance be a pump, a motor, a valve, etc. A process, or a part of a process, may be controlled via the process control device 16, which then typically communicates with a controller for providing local control using field devices. The safety control device 18 may in similar manner control safety in the automation system 10, while the condition monitoring device 19 monitors the condition or health of the automation devices.

The automation equipment 20, 22, 24, 26, 28, 30 is located in a first automation equipment environment AEE 31, which may be located remotely from a control room environment where the user terminals 12, 14 are located. The automation equipment environment 31 may additionally or instead be a harsh or hostile environment, such as an environment that is gaseous or aqueous or an environment that is otherwise unsuitable for humans. It may for instance have a high and/or low pressure or a high or low temperature.

Fig. 2 shows one realization of the safety control device SCD 18. It comprises a first processor 32 connected to a first memory 34 with computer instructions 36 implementing an alert handling function. The computer instructions 36 may be computer program code of a computer program, where the computer program code implements the alert handling function when being run by the first processor 32. The safety control device 18 therefore acts as an alert handling device. The memory 34 may also be considered to be a data carrier with the computer program code or computer instructions 36 used to implement the alert handling function. In this case the data carrier with computer program code implementing the alert handling function may also be considered to form a computer program product.

The safety control device 18 also comprises a first Input/Output interface I/O 1 38 for communicating with other devices such as the automation equipment 20, 22, 24, 26, 28, 30. It also comprises a second Input/Output interface I/O 2 40 which is used for communicating with an equipment inspecting carriage. The first I/O interface 38 may be an Ethernet interface or a fieldbus interface and the second I/O interface 40 may be a wireless interface.

It should here be realized that it is possible that the process control device 16 and the condition monitoring device 19 have the same or similar type of realization as the safety control device 18.

Fig. 3 schematically shows the equipment inspecting carriage EIC 44, which runs on a track TR 42 that goes into the automation equipment environment AEE 31. The equipment inspecting carriage 44 is thereby adapted to run on a track 42 at least entering a first area of an automation system 10 comprising the first piece of automation equipment 20, which first area is an automation equipment environment 31 for the first piece of automation equipment 20. It is also an automation equipment environment 31 for the second, third, fourth, fifth and sixth pieces of automation equipment 22, 24, 26, 28, 30. The track 42 may as an example be a rail. The equipment inspecting carriage 44 comprises an image capturing device ICD 46, a sound registering arrangement SRA 48 and an optional sensor device SD 50 for sensing properties of the automation equipment environment 31. The equipment inspecting carriage 44 also comprises a carriage control unit CCU 52. The sound registering arrangement 48 may comprise one or more sound registering devices and may more particularly comprise an array of sound registering devices, which may be microphones. These microphones may additionally be directional microphones. The image capturing device 46 may be a camera and may with advantage be a video camera. The image capturing device 46 may additionally have an orientation that is adjustable so that it can be pointed in different directions. It may also have zoom capability.

The equipment inspecting carriage 44 with the carriage control unit 52 is an equipment inspecting arrangement. It should here be realized that although the carriage control unit 52 in this example is a part of the equipment inspecting carriage 44, it can in other variations be provided outside of the equipment inspecting carriage 44. It may for instance be a part of the safety control device 18.

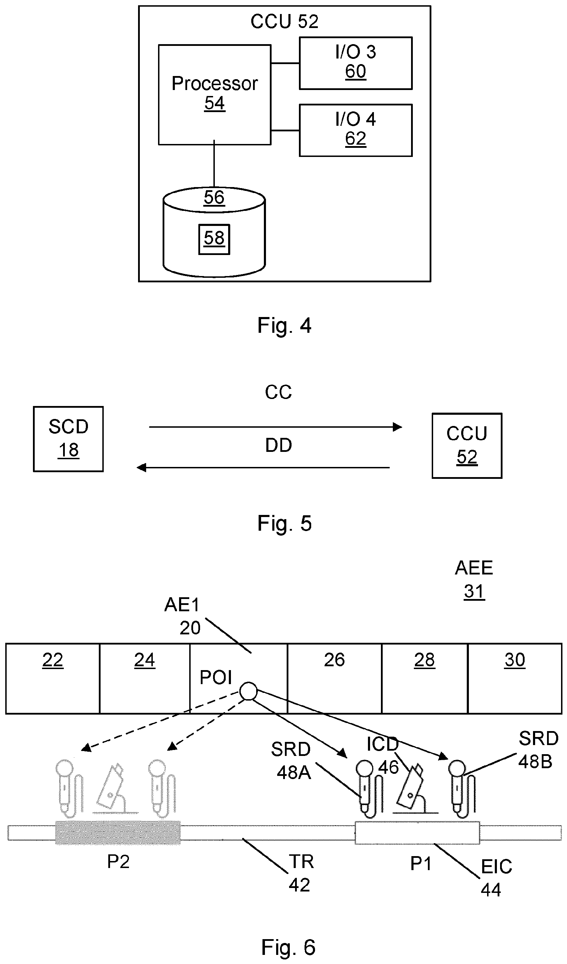

Fig. 4 schematically shows a variation of the carriage control unit CCU 52. It comprises a second processor 54 connected to a second memory 56 with computer instructions 58 implementing a carriage control function. The memory 56 may also be considered to be a data carrier with the computer program code or computer instructions 58 used to implement the carriage control function. In this case the data carrier with computer program code or computer instructions 58 implementing the carriage control function may also be considered to form a computer program product. The carriage control unit 52 also comprises a third Input/Output interface I/O 3 60 for communicating with the image capturing device 46, the sound registering arrangement 48 and the sensor device 50 as well as a fourth Input/Output interface I/O 4 62 for communication with the safety control device. The third I/O interface 60 may be an interface to a communication bus on the equipment inspecting carriage 44, to which bus also the image capturing device 46, sound registering arrangement 48 and sensor device 50 are connected, while the fourth I/O interface 62 may be a wireless interface.

Fig. 5 schematically shows the safety control device SCD 18 communicating with the carriage control unit CCU 52. The safety control device 18 may send a control command CC to the carriage control unit 52 and the carriage control unit 52 may send diagnosing data DD to the safety control device 18.

Fig. 6 schematically shows the equipment inspecting carriage 44 on the track TR 42 in the automation equipment environment AEE 31. The first, second, third, fourth, fifth and sixth pieces of automation equipment 20,22, 24, 26, 28, 30 are here provided on a rack in the automation equipment environment 31 and the track 42 passes by this rack. In the figure, the equipment inspecting carriage 44 comprising the image capturing device 46 and the sound registering arrangement, which here comprises a first and a second sound registering device SRD 48A, SRD 48B, is placed at a first track position P1 at which the first and second sound registering devices 48A, 48B register sound from a point of interest POI on the first piece of automation equipment AE1 20. Subsequently the equipment inspecting carriage 44 can be moved to a second track position P2 in which the sound registering devices 48A, 48B also register sound from the point of interest POI. The equipment inspecting carriage 44 is shaded in the second track position P2.

It may be of interest to inspect the first piece of automation equipment 20 in the automation equipment environment, for instance because a fault has been detected by the safety control device 18. For this reason, it may be desirable to move the equipment inspecting carriage out to the automation equipment environment 31 in order to get a view of the first piece of automation equipment 20. Furthermore, there may be a point of interest POI on the piece of automation equipment that needs to be inspected, for instance because it may be the cause of the alarm. However, the location of this point of interest may not be known, for instance because alerts, such as alerts about faults, are only linked to the piece of automation equipment as such.

Aspects of the present disclosure are directed towards allowing such a point of interest on a piece of automation equipment to be investigated in a simple and efficient way.

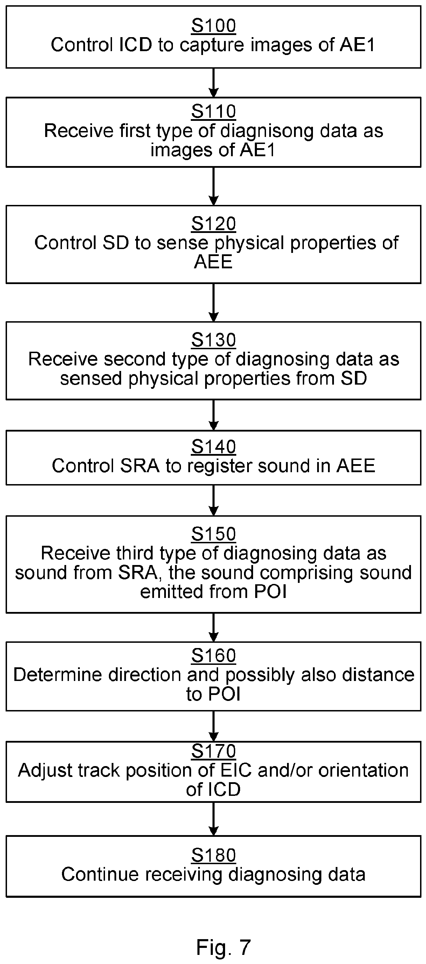

How this may be done will now be described with reference also being made to Fig. 7, which shows a flow chart of a number of method steps in a method of controlling the equipment inspecting carriage 44 and being performed by the carriage control function of the carriage control unit 52.

When the carriage control unit 52 starts operation, the equipment inspecting carriage 44 may already be at the first track position P1 on the track 42. It is also possible that the location of the first piece of automation equipment 20 in relation to the first track position P1 is known and that the image capturing device 46 has an orientation that it is directed towards the first piece of automation equipment 20. It is additionally possible that sounds are being emitted from the point of interest POI on the first piece of automation equipment 20, which sounds may be the cause of the alarm or an indication of the cause of the alarm. The automation equipment environment 31 may be a normally "silent" environment, where any noise has noise levels that are below the sound levels of the sound emitted from the point of interest POI.

When the equipment inspecting carriage 44 is in the first track position P1 in the first automation equipment environment 31, the carriage control function of the carriage control unit 52 controls the image capturing device 46 to capture images of the first piece of automation equipment 20, S100. The carriage control function of the carriage control unit 52 also receives the images of the first piece of automation equipment 20 from the image capturing device 46, S110, where the images are a first type of diagnosing data DD. The images may for instance be in the form of a video stream. The carriage control function of the carriage control unit 52 optionally also controls the sensor device 50 to sense one or more physical properties of the automation equipment environment 31, S120, which properties may be the properties of a fluid in the automation equipment environment 31, which fluid may be a gas such as air or a liquid such as water. The properties may also comprise temperature and/or pressure. The properties may also comprise a degree of contamination of the fluid. In the case of air, the presence of smoke may be considered to be a contamination. The carriage control function of the carriage control unit 52 receives the sensed physical properties from the sensor device 50 as a second type of diagnosing data DD, S130. The carriage control function of the carriage control unit 52 also controls the sound registering arrangement 48 to register sounds emitted in the automation equipment environment, S140. The carriage control function of the carriage control unit 52 then receives the sounds from the sound registering arrangement 48, S150, which sounds are a third type of diagnosing data of the first piece of automation equipment 20. The received sounds are therefore sounds registered at the first track position P1 of the equipment inspecting carriage 44 and comprise sounds of the first piece of automation equipment 20 emitted from the point of interest POI on this first piece of automation equipment 20.

Moreover, the carriage control function of the carriage control unit 52 determines a direction from the image capturing device 46 to the point of interest POI on the first piece of automation equipment 20 and optionally also a distance from the image capturing device 46 to the point of interest POI based on the received sounds, S160. The direction may be easy to determine in case the emitted sound is discernible from the noise. This may be even simpler if the sound registering arrangement 48 comprises an array of sound registering devices, as exemplified by the array of two sound registering devices 48A, 48B shown in Fig. 6. Also, the distance can be easily determined from the first track positionP1 in case the sound registering arrangement 48 comprises an array of sound registering devices, for instance through using triangulation.

It is also possible to determine the distance if the sound registering arrangement 48 only comprises one sound registering device, for instance through moving the equipment inspecting carriage 44 to the second track position P2 and registering sounds also at this second track position P2. The sound registering arrangement 48 may thus be moveable between two different arrangement positions, here corresponding to the first and the second track positions P1 and P2 and the distance is determined based on the sounds registered at these two arrangement positions. Alternatively, the sound registering arrangement 48 may be moveable on the equipment inspecting carriage 44, so that the sounds are registered at two different positions of the sound registering arrangement 48 on the equipment inspecting carriage 44, while the equipment inspecting carriage is at the first track position P1. Here it should be mentioned that it is possible that the equipment inspecting carriage 44 can be moved to the second position P2 even if the distance and direction have been determined. This may be done in order to confirm the determined direction and distance.

The carriage control function of the carriage control unit 52 then adjusts the track position of the equipment inspecting carriage 44 and/or the orientation of the image capturing device 46 based on the determined direction and optionally also based on the determined distance, S170. The adjusting may involve moving the equipment inspecting carriage 44 to a track position for which the distance between the image capturing device 46 and the point of interest POI is the shortest. It may instead be a track position for which there is a line of sight between the point of interest POI and the image capturing device 46. Furthermore, it may be the shortest distance for which there is a line of sight between the point of interest POI and the image capturing device. The adjusting may additionally or instead comprise changing the orientation of the image capturing device 46 such that it points towards the point of interest POI.

When the adjusting is finished, the carriage control function of the carriage control unit 52 continues to receive diagnosing data DD, S180. It thus continues to receive sounds from the sound registering arrangement 48, images from the image capturing device 46 and possibly also physical properties of the automation equipment environment 31 from the sensor device 50.

It is thereby possible to obtain better visual information of the point of interest POI on the first piece of automation equipment 20, especially if the position is being zoomed in, which may assist in diagnosing the cause of an alert. It is also possible that the quality of the other types of diagnosing data is improved.

The carriage control unit can thereby use auto tracking of the image capturing device 46 based on the integration of audio/ acoustic sound. The carriage control unit 52 may be able to process and analyse the audio data. The sound is thus used to determine the direction and optionally also the distance of the source of a specific sound. This can then be integrated with the image capturing device so that the image capturing device automatically looks toward the point where the sound is emitted.

In the example given above, images were captured and automation equipment environment properties were sensed at the first track position P1 before the track position was adjusted. It should be realized that it is possible to start to capture images and sense automation equipment environment properties only after the adjustment has been made.

As was mentioned earlier, the diagnosing data DD can be used for assisting the safety control device 18, which is done when the safety control device acts as an alert handling device. One way in which this may be done will now be described with reference being made to Fig, 8, which shows a flow chart of a number of further steps in the method of controlling the equipment inspecting carriage, which method steps are being performed by the alert handling function of the safety control device 18.

The alert handling function of the safety control device 18 acting as an alert handling device may obtain an alert regarding the first piece of automation equipment 20, S200. The alert, which may be an alarm, may be received from a sensor in or at the first automation equipment 20. Alternatively, the alert handling device may determine the alert based on received sensor measurements of the first piece of automation equipment. The alert may be displayed to an alarm operator at a user terminal in the control room environment, such as at the first user terminal 12. Based on this alert the operator or the alert handling function of the safety control device 18 may control the equipment inspecting carriage 44 to move to the first track position P1 in the automation equipment environment 31, S210. This may be done through sending a control command CC, with advantage wirelessly, to the carriage control unit 52, which control command CC may be an instruction to move the equipment inspecting carriage 44 to the first track position P1, and to gather diagnosing data DD. The first track position P1 may in this case be a nominal data gathering position associated with the first piece of automation equipment 20. The carriage control function of the carriage control unit 52 may receive this control command CC and may then control the equipment inspecting carriage 44 to move on the track 42 to the first track position P1 in the automation equipment environment 31, for instance through controlling a motor of the equipment inspecting carriage 44. The equipment inspecting carriage 44 may therefore move from outside of the automation equipment environment 31 to within it. The carriage control function of the carriage control unit 52 may then receive the different types of diagnosing data DD in the previously described way.

The alert handling function of the safety control device 18 collects the diagnosing data DD from the equipment inspecting carriage, S220, which may be done as soon as the carriage control unit 52 receives the diagnosing data. The collecting may be performed through the carriage control function of the carriage control unit 52 sending the diagnosing data DD to the alert handling function of the safety control device 18, for instance wirelessly. The diagnosing data DD may then be displayed to the alarm operator at the first user terminal 12, who may then perform an activity such as a safety activity. Alternatively, the alert handling function of the safety control device 18 may determine the activity itself based on the collected diagnosing data, S230. After the activity has been determined, the alert handling function of the safety control device 18 may then perform the activity, S240. The activity may involve a number of actions, such as stopping or halting operation of one or more of the pieces of automation equipment in the first automation equipment environment including the first piece of automation equipment.

There is thus proposed the use of a movable equipment inspecting carriage on a track. Thereby a verification of the status of the automation equipment environment, particularly if there has been an alert, can be performed remotely by the use of the image capturing device. The image capturing device can be controlled by a remote operator and may also be automatically guided to the right position based on sensors that activated the alert. For selected and critical parts of the automation equipment environment, a non-intrusive track-based moveable equipment investigating carriage integrated with the automation system is thus used. This extends the working volume of the image capturing device so that it can view a wide area and can be steered to change the point of focus. By being linked to the automation system, automatic cueing of the image capturing device, based on signals from the alarm and perhaps of a condition monitoring system would provide a flexible, automatic and extendable solution. This provides real-time decision support to the operator.

The sound registering arrangement is thus able to pick up the sound from a faulty or failing piece of equipment. The carriage control unit may filter and process the sound and can remove background ambient noise. It may also estimate the relative location of the sound which can also be confirmed by moving the equipment inspecting carriage to a new position, the second track position P2.

The live sound may also be available to the control room operator and may be recorded and tagged for historic analysis.

Furthermore, it is possible to use the equipment inspecting carriage also for condition monitoring in the condition monitoring device.

In this case it is possible to register regular sound profiles and use artificial intelligence (AI) analysis to say something about the condition monitoring over time.

In this case it is possible to register a reference sound profile from the automation equipment environment at the time of commissioning the automation equipment (healthy state), from several locations and for a representative period of time while the equipment is running in normal operations. If there are several operating modes, then each such mode may be recorded.

It is thereafter possible to regularly repeat these recordings during the lifetime of the automation equipment and use acoustic analysis (AI, machine learning, trend analysis, etc.) to assess the degradation over time and to identify anomalies and potential machine malfunction from the audio signals. These indications can also be used as a seed to be able to assess the location of the faulty automation equipment. With a large enough dataset and learning pool, anomalies and machine failure can be identified at an early stage.

It is possible to combine the anomaly and machine failure identification with the auto-cuing of the image recording device so that the proposed audio indicated anomalies can be visually confirmed by the camera/ video system.

It is also possible that the equipment investigating carriage is used in an exploratory mode, where the audio is available to an operator together with the camera/ video feed. The operator can steer the camera and microphones and use this to "explore" the sounds and sight from the control room environment. This may be most beneficial for an experienced operator and linking their analysis and expertise could seed the learning algorithms of the acoustic analysis.

Although the alert handling function was described as being provided in the safety control device, it should be realized that it may just as well be provided as a part of the process control device or the condition monitoring device. These devices may thus also act as alert handling devices.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

## Claims

1. An equipment inspecting arrangement for inspecting a first piece of automation equipment (20), the equipment inspecting arrangement comprising an equipment inspecting carriage (44) adapted to run on a track (42) at least entering a first area of an automation system (10) comprising the first piece of automation equipment (20), the first area being an automation equipment environment (31) for the first piece of automation equipment (20), the equipment inspecting carriage (44) comprising an image capturing device (46) and a sound registering arrangement (48), the equipment inspecting arrangement further comprising a carriage control unit (52) operative to
control the sound registering arrangement (48) to register sounds emitted in the automation equipment environment (31), which sounds are a type of diagnosing data (DD) of the first piece of automation equipment (20) and comprise sounds registered at a first track position (P1) of the equipment inspecting carriage (44),
receive said sounds from the sound registering arrangement (48), said sounds comprising sounds emitted from a point of interest (POI) on the first piece of automation equipment (20),
determine a direction from the image capturing device (46) to the point of interest (POI) on the first piece of automation equipment (20) based on the received sounds, and
adjust the track position of the equipment inspecting carriage (44) and/or the orientation of the image capturing device (46) based on the determined direction.

2. The equipment inspecting arrangement according to claim 1, wherein the carriage control unit (52) is further operative to determine a distance from the image capturing device (46) to the point of interest (POI) based on the received sounds and the adjusting is based also on the determined distance.

3. The equipment inspecting arrangement according to claim 2, wherein the sound registering arrangement (48) is moveable between two different arrangement positions and the distance is determined based on the sounds registered at the two arrangement positions.

4. The equipment inspecting arrangement according to any previous claim, the carriage control unit (52) being further operative to control the image capturing device (46) to capture images of the first piece of automation equipment (20) and receive said images from the image capturing device (46), said diagnosing data (DD) of the first piece of automation equipment (20) also comprising said received images.

5. The equipment inspecting arrangement according to any previous claim, wherein the equipment inspecting carriage (44) further comprises a sensor device (50) operative to sense physical properties of the automation equipment environment (31) and the carriage control unit (52) is further operative to receive the sensed physical properties of the automation equipment environment (31), said diagnosing data (DD) of said first piece of automation equipment (20) also comprising the sensed physical properties of the automation equipment environment (31).

6. An automation system (10) comprising automation equipment (20, 22, 24, 26, 28, 30) including the first piece of automation equipment (20) in the first area of the automation system (10), an alert handling device (16; 18; 19) and the equipment inspecting arrangement according to any previous claim.

7. The automation system (10) according to claim 6, wherein the alert handling device (16; 18; 19) is operative to control the equipment inspecting carriage (44) to move on the track (42) to the first track position (P1) in the automation equipment environment (31).

8. The automation system (10) according to claim 7, wherein the alert handling device (16; 18; 19) is operative to obtain an alert regarding said first piece of automation equipment (20) and the control of the equipment inspecting carriage (44) to move to the first track position (P1) is based on the alert.

9. The automation system (10) according to any of claims 6-8, wherein the alert handling device (16; 18; 19) is operative to collect the diagnosing data (DD) from the equipment inspecting carriage (44), determine an activity based on the diagnosing data (DD) and perform the activity in the automation system (10).

10. A method of controlling an equipment inspecting carriage (44) in an automation system (10) comprising automation equipment (20, 22, 24, 26, 28, 30) including a first piece of automation equipment (20) in a first area of the automation system (10), the first area being an automation equipment environment (31) for the first piece of automation equipment (20) and the equipment inspecting carriage (44) comprising an image capturing device (46) and a sound registering arrangement (48), the method comprising:
controlling (S140) the sound registering arrangement (48) to register sounds emitted in the automation equipment environment (31), which sounds are a type of diagnosing data (DD) of the first piece of automation equipment (20) and comprise sounds registered at a first track position (P1) of the equipment inspecting carriage (44),
receiving (150) said sounds from the sound registering arrangement (48), said sounds comprising sounds emitted from a point of interest (POI) on the first piece of automation equipment (20),
determining (S160) a direction from the image capturing device (46) to the point of interest (POI) on the first piece of automation equipment (20) based on the received sounds, and
adjusting (S170) the track position of the equipment inspecting carriage (44) and/or the orientation of the image capturing device (46) based on the determined direction.

11. The method according to claim 10, further comprising controlling (S100) the image capturing device (46) to capture images of the first piece of automation equipment (20) and receiving (S110) said images from the image capturing device (46), said diagnosing data (DD) of the first piece of automation equipment (20) also comprising said received images.

12. The method according to claim 10 or 11, wherein the equipment inspecting carriage (44) further comprises a sensor device (50) operative to sense physical properties of the automation equipment environment (31) and further comprising receiving (S130) the sensed physical properties of the automation equipment environment (31), said diagnosing data (DD) of said first piece of automation equipment (20) also comprising the sensed physical properties of the automation equipment environment (31).

13. The method according to any of claims 10 - 12, further comprising controlling (S210) the equipment inspecting carriage (44) to move on the track (42) to the first track position (P1) in the automation equipment environment (31).

14. The method according to any of claims 10 - 13, further comprising obtaining (S200) an alert regarding said first piece of automation equipment (20) and where the controlling (S210) of the equipment inspecting carriage (44) to move to the first track position (P1) is based on the alert.

15. The method according to any of claims 10 - 14, further comprising collecting (S220) the diagnosing data (DD) from the equipment inspecting carriage (44), determining (S230) an activity based on the diagnosing data (DD) and performing (S240) the activity in the automation system (10).
